# FASCICULE DE BREVET EUROPEEN

(11) **EP 3 550 197 B1**
(45) Date de publication et mention de la délivrance du brevet: **23.09.2020**
(21) Numéro de dépôt: 19166694.0
(22) Date de dépôt: 02.04.2019
(51) Int. Cl.: F16L 37/32, F16L 37/34

(54) **RACCORD FLUIDIQUE**
FLUIDANSCHLUSSELEMENT
FLUID CONNECTOR

(30) Priorité: 03.04.2018 FR 1852878
(43) Date de publication de la demande: 09.10.2019
(73) Titulaire: Staubli Faverges, 74210 Faverges-Seythenex (FR)
(72) Inventeur: Tiberghien, Alain-Christophe, 74320 Sevrier (FR); Durieux, Christophe, 73200 Gilly sur Isere (FR); Marques Barroca, Serafim, 73460 Frontenex (FR)
(74) Mandataire: Lavoix

(56) Documents cités:
- EP-A1- 2 020 555
- WO-A1-98/16773
- DE-A1-102010 019 094
- US-A- 3 790 126

## Description

La présente invention concerne un raccord fluidique.

Pour le raccordement de plaques portant des éléments de raccord mâle et femelle complémentaires, il est connu notamment de EP2020555, d'utiliser des raccords dont l'élément mâle comporte un nez et une soupape, et l'élément femelle un piston central fixe repoussant la soupape de l'élément mâle et un tiroir entourant le piston et apte à être repoussé par le nez de l'élément mâle. Cela permet l'adaptation aux défauts potentiels d'alignement entre les deux éléments de raccord au début de l'accouplement.

Cependant certaines applications, comme le bridage de pièces, requièrent un nez d'élément mâle court (distance entre la plaque et la face avant du nez la plus courte possible) et des courses d'accouplement très faibles (de l'ordre de 5mm maximum) qui ne sont pas compatibles avec la construction piston fixe/tiroir décrite dans EP2020555. En effet, avec une course d'accouplement faible, en configuration accouplée, le passage de fluide autour du piston dans le corps mâle est insuffisant.

Il est également connu de US3790126 d'actionner un piston pour l'ouverture du passage entre deux conduits par un levier externe. Dans la séquence d'accouplement, l'opérateur rapproche les corps mâle et femelle pour prendre l'étanchéité entre le corps mâle et le corps femelle. Puis l'opérateur actionne le levier et déplace le piston vers l'avant pour l'ouverture du passage (cette construction ne comprend pas de tiroir mobile autour du piston). Dans cette séquence d'accouplement, l'ouverture ne se fait pas lors du rapprochement des corps mâle et femelle et n'est donc pas automatique.

C'est à ces inconvénients qu'entend remédier l'invention en proposant un nouveau raccord fluidique permettant une ouverture du passage de fluide automatique et mieux adaptée aux faibles courses d'accouplement.

A cet effet l'invention concerne un raccord fluidique comprenant un élément mâle de raccord et un élément femelle de raccord apte à s'emmancher l'un dans l'autre, l'élément mâle comprenant :
- un corps mâle définissant un conduit interne,
- une soupape, mobile par rapport au corps mâle entre une position d'ouverture et une position de fermeture étanche du conduit interne du corps mâle,
- un ressort repoussant la soupape vers sa position de fermeture,
et l'élément femelle de raccord comprenant :
- un corps femelle définissant un conduit interne le long d'un axe central longitudinal et comportant au moins un joint d'étanchéité,
- un piston s'étendant selon l'axe central longitudinal,
- un tiroir monté autour du piston et mobile par rapport au corps femelle selon l'axe central longitudinal entre une position de fermeture, dans laquelle le joint d'étanchéité du corps femelle coopère avec le tiroir et le tiroir coopère de manière étanche avec le piston, et une position reculée d'ouverture du conduit interne du corps femelle,
dans une phase d'accouplement entre l'élément mâle et l'élément femelle, le corps mâle repousse le tiroir vers sa position d'ouverture et le piston repousse la soupape vers sa position d'ouverture.

Ce raccord est caractérisé en ce que :
- le piston est monté avec possibilité de déplacement par rapport au corps femelle le long de l'axe central longitudinal entre une position arrière et une position avancée,
- l'élément femelle comprend au moins un levier de transformation du mouvement du tiroir en déplacement du piston,
- au cours de la phase d'accouplement :
   de la position de fermeture du tiroir à une position décalée du tiroir, dans laquelle le corps mâle coopère avec le joint d'étanchéité du corps femelle, le ou chaque levier est débrayé du tiroir et/ou du piston, et le piston est en position arrière ;
   de la position décalée du tiroir à la position d'ouverture du tiroir, le levier est embrayé avec le tiroir et avec le piston, et déplace le piston vers sa position avancée et
- en configuration accouplée, le piston est dans sa position avancée et s'étend en partie dans le corps mâle, un passage de fluide étant formé autour du piston dans le corps mâle.

Grâce à l'invention, le déplacement vers l'avant du piston dans le corps femelle, obtenu automatiquement lors de l'accouplement et après une course morte de la bague tiroir permettant la prise d'étanchéité du corps mâle avec le corps femelle avant la perte d'étanchéité du piston avec le tiroir, offre un passage de fluide satisfaisant dans une configuration de course d'accouplement faible.

Selon des aspects avantageux mais non obligatoires de l'invention, un tel raccord peut incorporer une ou plusieurs des caractéristiques suivantes, prises dans toutes combinaisons techniquement admissibles :
- Le levier est monté mobile en rotation autour d'un axe de rotation fixe par rapport au corps femelle.
- Le levier coopère avec le piston par un pion se déplaçant dans une lumière, et le levier est embrayé avec le piston par coopération du pion avec une surface active de la lumière.
- Entre la position de fermeture et la position décalée du tiroir, le levier est débrayé du piston et le pion est en mouvement dans la lumière le long d'une surface courbée de la lumière, centrée sur l'axe de rotation du levier.
- Le tiroir coopère avec le levier par un axe tiroir se déplaçant dans une cavité, et le levier est embrayé avec le tiroir par coopération de l'axe tiroir avec une surface active de la cavité.
- Entre la position de fermeture et la position décalée du tiroir, le levier est débrayé du tiroir et le tiroir coopère avec le levier par un axe tiroir se déplaçant dans une cavité comprenant une portion glissante longitudinale dans laquelle l'axe tiroir se déplace lorsque le levier est débrayé du tiroir, et une surface active inclinée par rapport à la portion glissante, avec laquelle l'axe tiroir coopère lorsque le levier est embrayé avec le tiroir.
- Le rapport entre une course de déplacement axial du piston entre sa position arrière et sa position avancée et une course de déplacement axial du tiroir entre sa position décalée et sa position d'ouverture en configuration accouplée est au moins égal à 1,2, de préférence au moins égal à 2,25.
- Le piston s'étend le long de l'axe central longitudinal, et l'élément femelle comprend deux leviers disposés de part et d'autre de l'axe central longitudinal, chacun des leviers coopérant avec le piston par un pion se déplaçant dans une lumière du piston, chacun des leviers coopérant avec le tiroir par un axe tiroir se déplaçant dans une cavité du tiroir, et chacun des leviers comprenant un axe fixe monté pivotant dans un logement solidaire du corps femelle selon l'axe central longitudinal.
- Pour chaque levier, dans une configuration embrayée avec le piston et avec le tiroir, le rapport entre la distance entre l'axe de rotation fixe et un axe central du pion et la distance entre l'axe de rotation fixe et un axe central de l'axe tiroir est strictement supérieur à 1,2, de préférence supérieur ou égal à 2.
- Le tiroir est formé par une bague délimitant un volume intérieur dans lequel sont montés le ou les leviers et le piston.
- Le piston comprend une tige arrière de centrage, et dans toutes les positions du piston dans son déplacement par rapport au corps femelle, la tige arrière est engagée dans un logement de guidage solidaire du corps femelle.
- Le raccord fluidique comprend une bague chape montée solidaire du corps femelle selon l'axe central longitudinal, et la bague chape comprend au moins un flasque qui s'étend selon l'axe central longitudinal et qui coopère latéralement avec le piston et le levier.
- La bague chape forme une butée arrière au piston dans sa position arrière.
- Le ou chaque levier est de forme externe triangulaire.
- Le corps mâle comprend un nez monté avec possibilité de mouvement, transversalement à l'axe central longitudinal, par rapport à une autre partie du corps mâle.

L'invention sera mieux comprise et d'autres avantages de celle-ci apparaitront plus clairement dans la description qui va suivre d'un raccord conforme à son principe, faite à titre d'exemple non limitatif en référence aux dessins annexés dans lesquels :
- la figure 1 est une coupe longitudinale d'un raccord conforme à l'invention, dans une configuration désaccouplée;
- la figure 2 est une vue en perspective éclatée d'une partie du raccord de la figure 1;
- la figure 3 est une coupe transversale (agrandie) selon le plan III du raccord de la figure 1 ;
- la figure 4 est une coupe longitudinale du raccord de la figure 1 dans une première étape d'accouplement ;
- la figure 5 est une coupe longitudinale du raccord de la figure 1 dans une seconde étape d'accouplement ;
- la figure 6 est une coupe transversale (agrandie) selon le plan VI du raccord de la figure 5 ;
- la figure 7 est une coupe longitudinale du raccord de la figure 1 dans une configuration accouplée ;
- la figure 8 est une coupe longitudinale d'un élément femelle appartenant à un raccord conforme à un deuxième mode de réalisation de l'invention ;
- la figure 9 est une coupe longitudinale du raccord comprenant l'élément femelle de la figure 8, en cours d'accouplement ;
- la figure 10 est une coupe du raccord de la figure 9 en configuration accouplée ;
- la figure 11 est une coupe longitudinale d'un élément femelle appartenant à un raccord conforme à un troisième mode de réalisation de l'invention ;
- la figure 12 est une coupe longitudinale du raccord comprenant l'élément femelle de la figure 11, en cours d'accouplement ;
- la figure 13 est une coupe du raccord de la figure 12 en configuration accouplée.

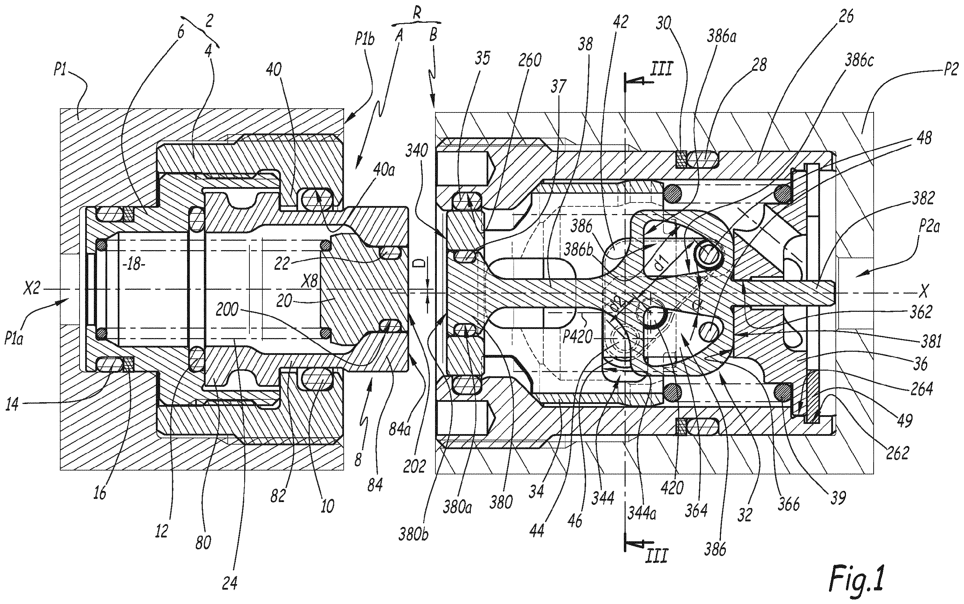

La figure 1 représente un raccord fluidique R comprenant un élément de raccord mâle A et un élément de raccord femelle B, dans une configuration désaccouplée dans laquelle l'élément mâle A et l'élément femelle B sont éloignés l'un de l'autre. L'élément mâle A et l'élément femelle B sont aptes à s'emmancher l'un dans l'autre pour la jonction amovible de deux conduits de fluide.

L'élément mâle A comprend un corps mâle 2. Le corps mâle 2 est composé d'une partie avant 4 et d'une partie arrière 6 vissées l'une avec l'autre. Le corps mâle 2 est centré sur un axe central longitudinal X2.

Dans ce qui suit, les termes « avant » et « arrière » sont employés respectivement pour les éléments de l'élément mâle A situés du côté de l'élément femelle B et du côté opposé à l'élément femelle B. Cette distinction est également employée de la même façon pour les éléments de l'élément femelle B en référence à leur position par rapport à l'élément mâle A.

Les termes « axial », « longitudinal » et « radial » sont employés en référence à l'axe X2.

Le corps mâle 2 comprend également un nez 8 qui est monté avec possibilité de débattement radial par rapport à la partie avant 4 et à la partie arrière 6 du corps mâle 2, c'est à dire dans une direction perpendiculaire à l'axe X2. Le nez 8 est centré sur un axe longitudinal X8. A titre d'exemple, ce débattement peut être de l'ordre de 0,25 mm. Le nez 8 est pris en sandwich entre la partie avant 4 et la partie arrière 6. La partie avant 4 et la partie arrière 6 forment un logement d'une partie élargie 80 du nez 8 et bloquent le nez 8 en translation axiale. Le nez 8 comprend une partie centrale 82, montée dans une région resserrée 40 de la partie avant 4. Cette partie centrale 82 a un diamètre extérieur inférieur au diamètre intérieur de la région resserrée 40 et la partie élargie 80 a un diamètre extérieur inférieur au diamètre intérieur de son logement entre la partie avant 4 et la partie arrière 6, ce qui permet le débattement radial du nez 8.

Un joint torique 10 est interposé entre le nez 8 et la partie avant 4 et rappelle le nez 8 en position centrale, c'est-à-dire en position alignée de l'axe X8 avec l'axe X2, lorsque l'élément mâle A est désaccouplé. Le joint 10 est logé dans une gorge 40a de la partie resserrée 40.

Un premier joint d'étanchéité 12 est interposé axialement entre le nez 8 et la partie arrière 6.

La partie avant 4 équipée de la partie arrière 6 est vissée en butée dans une première plaque P1 avec un deuxième joint d'étanchéité 14 et une bague anti-extrusion 16 interposés radialement entre la plaque P1 et la partie arrière 6.

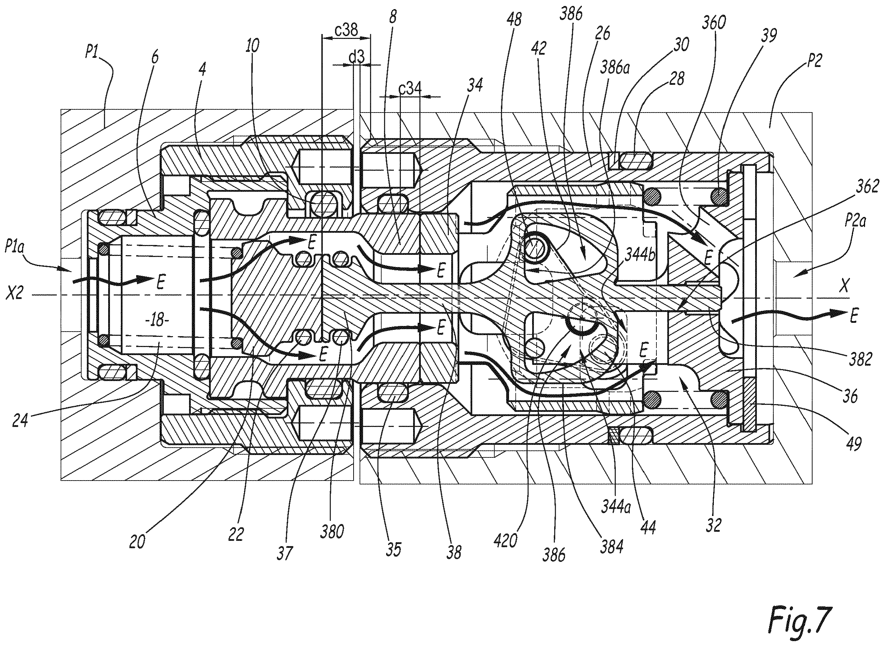

Le corps mâle 2 définit un conduit interne d'écoulement 18 qui s'étend le long de l'axe X2, traverse le corps mâle 2 de part en part et qui communique avec un conduit d'écoulement P1a de la plaque P1. Une soupape 20 est montée mobile dans le conduit interne 18, à l'intérieur du nez 8. La soupape 20 est mobile selon l'axe X8 entre une position de fermeture du conduit interne 18, représentée à la figure 1, et une position d'ouverture du conduit interne 18, représentée à la figure 7. L'élément mâle A comporte un troisième joint d'étanchéité 22 logé dans une gorge externe 200 de la soupape 20, et en configuration désaccouplée, ce joint 22 coopère radialement avec une région avant resserrée 84 du nez 8, qui fait saillie d'une face avant P1b de la plaque P1.

L'élément mâle A comporte également un ressort 24 qui repousse la soupape 20 en direction de sa position de fermeture. En position de fermeture, une face avant 202 de la soupape 20 est alignée axialement avec une face avant 84a du nez 8. Cette face avant 84a est portée par la région avant resserrée 84. Dans la position de fermeture de la soupape 20, la face avant 202 et la face avant 84a sont comprises dans un même plan perpendiculaire à l'axe longitudinal X2.

L'élément de raccord femelle B comprend un corps femelle 26 est vissé dans une seconde plaque P2. Le corps femelle 26 définit un axe central longitudinal X. Pour les éléments de l'élément femelle B, les termes « axial », « longitudinal » et « radial » font référence à l'axe X.

L'élément de raccord femelle B comprend un premier joint d'étanchéité 28 et une bague anti-extrusion 30 assurant une étanchéité radiale entre le corps femelle 26 et la seconde plaque P2.

Le corps femelle 26 définit un conduit interne 32 qui s'étend le long de l'axe X, traverse le corps femelle 26 de part en part et communique avec un conduit P2a de la plaque P2.

L'élément femelle B comporte un tiroir, formé par une bague tiroir 34, une bague chape 36 et un piston 38 montés au sein du conduit interne 32.

La bague tiroir 34 est mobile selon l'axe X entre une position de fermeture, représentée à la figure 1, et une position reculée d'ouverture, représentée à la figure 7. Dans la position de fermeture, la bague tiroir 34 est en butée contre le corps femelle 26 et coopère radialement de façon étanche avec une tête cylindrique 380 pleine du piston 38 et le corps femelle 26. L'élément femelle B comporte un deuxième joint d'étanchéité 35 logé dans une gorge interne 260 du corps femelle 26, ce joint 35 assurant la coopération étanche entre le corps femelle 26 et le tiroir 34. L'élément femelle B comporte un troisième joint d'étanchéité 37 logé dans une gorge externe 380a de la tête de piston 380, qui assure la coopération étanche entre le tiroir 34 et la tête de piston 380. En position de fermeture, une face avant 340 du tiroir 34 est alignée axialement avec une face avant 380b du piston 38, portée par la tête de piston 380. En configuration désaccouplée, le bord avant de la gorge externe 380a est aligné axialement avec le bord avant de la gorge interne 260, ce qui permet à la tête de piston 380 d'être compacte axialement. En variante non représentée, le bord avant de la gorge externe 380a est axialement en arrière du bord avant de la gorge interne 260.

L'élément femelle B comporte un ressort 39 qui repousse la bague tiroir 34 en direction de sa position de fermeture. La bague tiroir 34 peut être repoussée dans le conduit interne 32 en position d'ouverture du conduit interne 32, à l'encontre de l'effort du ressort 39.

La bague chape 36 est montée à l'arrière du corps femelle 26. La bague chape 36 est montée à jeu radial réduit dans un logement cylindrique 264 du corps femelle 26. La bague chape 36 est donc solidaire radialement du corps femelle 26. La bague chape 36 assure une butée arrière pour le piston 38, par une surface avant 366 qui s'oppose à une surface arrière 381 du piston 38, lorsque celui est dans une position arrière visible à la figure 1, et un appui pour le ressort 39.

La bague chape 36 est percée de passages 360 pour la circulation du fluide dans le conduit interne 32. Dans cet exemple, les passages 360 sont au nombre de cinq et sont inclinés par rapport à l'axe X.

Le piston 38 s'étend le long de l'axe central longitudinal X et présente une tige arrière 382 de centrage, de section cylindrique avec deux méplats 382a, qui est engagée dans un logement de guidage 362 de la bague chape 36, cylindrique et traversant, dont les surfaces en coopération avec les parties cylindriques de la tige arrière 382 guident le piston 38 dans un mouvement de translation dans le corps femelle 26 le long de l'axe longitudinal X.

Le piston 38 comporte une partie élargie et plate 384 s'étendant axialement entre la tête de piston 380 et la tige de centrage 382. La bague chape 36 présente une paire de flasques 364 qui s'étendent vers l'avant, parallèlement à l'axe longitudinal X et entre lesquels est disposée la partie élargie et plate 384. La partie élargie et plate 384 et les flasques 364 s'étendent dans des plans parallèles. La bague tiroir 34 entoure partiellement les flasques 364 de la bague chape 36 ainsi que le piston 38 et forme deux surfaces internes planes 342 qui s'étendent de façon parallèle aux flasques 364 et à la partie élargie et plate 384.

L'élément femelle B comprend un dispositif de transformation du mouvement axial du de la bague tiroir 34 en un mouvement axial du piston 38 dans la direction opposée, interposé entre la bague tiroir 34 et le piston 38. Ce dispositif de transformation du mouvement est débrayable ainsi que cela ressortira de la suite de la description. Ainsi le piston 38 est monté avec possibilité de mouvement par rapport au corps femelle 26 le long de l'axe longitudinal X uniquement dans certaines phases d'accouplement et de désaccouplement. Ce dispositif de transformation du mouvement comprend deux leviers aplatis 42, ou bascules, de forme externe triangulaire, par exemple des triangles rectangles à sommets arrondis.

Chaque levier 42 est disposé entre chaque surface interne plane 342 de la bague tiroir 34 et chaque flasque 364. Chaque levier 42 est articulé par rapport au corps femelle 26 autour d'un axe de rotation Y420 formé par un axe fixe 420 qui s'étend en saillie du levier 42 selon une direction Y orthogonale à l'axe longitudinal X et orthogonale aux flasques 364, et qui est monté pivotant dans un logement 364a formé sur le flasque 364 adjacent.

Le dispositif de transformation du mouvement comprend également deux axes tiroir 44 cylindriques d'axe central Y44, chaque axe tiroir 44 étant fixé par vissage dans un trou fileté 421 du levier 42 et portant un patin 46 de forme globalement rectangulaire qui est logé dans une de deux cavités 344 traversantes de la bague tiroir 34. Les cavités 344 sont ménagées à travers une paroi 346 de la bague tiroir 34 parallèle aux surfaces internes planes 342. Chaque axe central Y44 forme un axe d'articulation entre le levier 42 correspondant et la bague tiroir 34. Les patins 46 comportent chacun un palier de guidage 460 interposé entre chaque axe tiroir 44 et son patin 46 de manière à assurer le guidage et la liberté en rotation du patin 46 par rapport à l'axe tiroir 44. Chaque axe tiroir 44 coopère avec la cavité 344 dans laquelle il est engagé par l'intermédiaire de son patin 46.

Chaque cavité 344 de la bague tiroir 34 est de forme globalement rectangulaire et sa plus grande dimension s'étend dans une direction Z transversale à l'axe longitudinal X et également orthogonale à la direction Y. La largeur des cavités 344, c'est-à-dire leur dimension selon l'axe longitudinal X, est sensiblement égale à la largeur, prise selon le même axe, des patins 46. La hauteur, dans la direction Z des cavités 344 est supérieure à la hauteur, prise selon la même direction Z, des patins 46. Cela permet un glissement des patins 46 dans les cavités 344 selon la direction Z.

Le dispositif de transformation du mouvement comprend également deux pions 48 cylindriques, d'axe central Y48,, chaque pion 48 étant solidaire d'un levier 42 et s'étendant parallèlement à l'axe central Y44 et à l'axe de rotation Y420, le pion 48 faisant saillie du levier 42 depuis une même face latérale 422 du levier 42 que l'axe fixe 420, et l'axe tiroir 44 faisant saillie du levier 42 depuis une face latérale 424 opposée du levier 42.

La partie élargie et plate 384 du piston 38 présente deux lumières 386 dont la forme est sensiblement triangulaire. Chaque pion 48 est engagé dans l'une des deux lumières 386. Chaque lumière triangulaire 386 présente une surface plane active 386a tournée vers l'arrière du corps femelle 26 et perpendiculaire à l'axe longitudinal X, une surface courbée 386b, dont le rayon de courbure est centré sur l'axe fixe 420, et une surface 386c inclinée par rapport à l'axe longitudinal X, par exemple d'un angle α de 10° environ.

On désigne par « surface active » toute surface d'interaction entre le levier 42 et le piston 38 ou entre le levier 42 et le tiroir 34 par laquelle il y a transmission de mouvement du levier 42 au piston 38, respectivement du tiroir 34 au levier 42.

L'axe central Y48 du pion 48, l'axe de rotation Y420 de l'axe fixe 420 et l'axe central Y44 de l'axe tiroir 44 associés à un même levier 42 s'étendent dans un même plan dans toutes les positions du levier 42. L'axe de rotation Y420 est disposé entre les axes centraux Y48 et Y44.

Pour chaque levier 42, la distance d1 entre l'axe de rotation Y420 de l'axe fixe 420 et l'axe central Y48 du pion 48 est supérieure à la distance d2 entre l'axe de rotation Y420 de l'axe fixe 420 et l'axe central Y44 de l'axe tiroir 44. En particulier le rapport entre la distance d1 et la distance d2 est au moins égal à 1,2, de préférence supérieur ou égal à 2, par exemple égal à 2,25.

Le dispositif de transformation du mouvement comprend de préférence deux leviers 42 disposés de part et d'autre de l'axe longitudinal X, deux pions 48 qui coopèrent avec deux lumières 386 du piston 38, et deux axes tiroirs 44 qui coopèrent avec deux cavités 344 de la bague tiroir 34. Le dispositif de transformation est ainsi disposé autour du piston 38 et «symétrique» par rapport à l'axe central longitudinal X.

La bague tiroir 324 définit un volume intérieur V34 délimité par les surfaces internes 342 et dans lequel sont montés les leviers 42 et le piston 38.

Le montage de l'élément femelle B est réalisé de la façon suivante. Un pré-ensemble est préalablement monté à l'extérieur du corps femelle 26. Le piston 38 est mis en place entre les deux flasques 364, en butée sur l'arrière contre la bague chape 36, avec la tige de centrage 382 engagée dans le logement de guidage 362. Les deux leviers 42 sont assemblés, avec les pions 48 et les axes fixes 420 engagés latéralement respectivement dans les lumières 386 du piston 38 et dans les logements 364a des flasques 364. Puis on met en place le ressort 39 en appui sur la bague chape 36 et la bague tiroir 34 autour des leviers 42. On met ensuite en place les deux patins 46 munis de leur palier 460 dans les cavités 344 de la bague tiroir 34, et on les fixe au levier 42 respectif en vissant les axes tiroir 44 dans les leviers 42. Le pré-ensemble ainsi formé est inséré dans le corps femelle 26 par l'arrière, puis une bague de butée 49 est montée dans le corps femelle 26 pour maintenir le pré-ensemble dans le corps femelle 26. Cette bague de butée 49 peut être formée par un anneau élastique monté dans une rainure interne 262 du corps femelle 26 qui maintient la bague chape 36 solidaire du corps femelle 26 selon l'axe longitudinal X. Le corps femelle 26 est ensuite vissé dans la plaque P2 après avoir préalablement interposé le joint d'étanchéité 28 et la bague anti-extrusion 30.

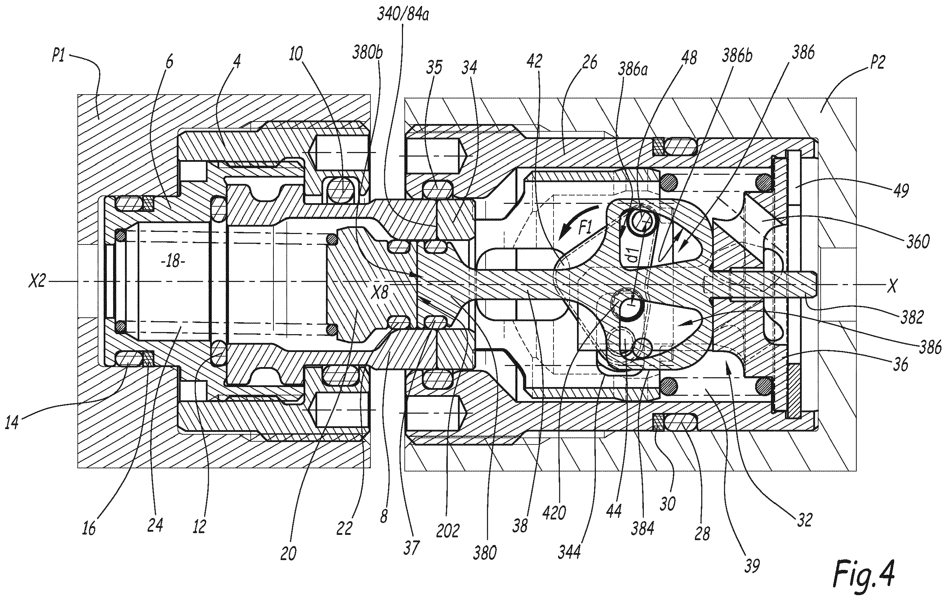

Lors de l'accouplement, les axes centraux X2 et X des corps mâle 2 et femelle 26 sont alignés, avec un défaut D maximum admissible de 0,25 mm, et les deux plaques P1 et P2 sont rapprochées. Le nez 8 s'engage dans le corps femelle 26, en s'alignant si besoin avec la position du corps femelle 26 du fait de sa possibilité de débattement radial ans le corps mâle 2 en se déportant dans le joint torique 10, puis le nez 8 vient en butée contre la bague tiroir 34. On remarque figure 4 que le nez 8 s'est désaxé par rapport à la partie avant 4, et que le joint 10 et plus compressé dans sa partie inférieure que dans sa partie supérieure par rapport à l'axe longitudinal X2. A partir ce de moment, les axes X8 et X sont confondus pour former l'axe d'accouplement X.

Puis la tête de piston 380 parvient en butée contre la face avant 202 de la soupape 20 et simultanément la face avant 340 du tiroir 34 parvient au contact de la face avant 84a du nez 8. La poursuite du mouvement de rapprochement provoque le déplacement par le piston 38 de la soupape 20 vers sa position d'ouverture et le déplacement par le nez 8 de la bague tiroir 34 vers sa position d'ouverture. A la figure 4, le nez 8 est parvenu au contact du deuxième joint d'étanchéité 35 et coopère avec celui-ci. Dans cette configuration, le troisième joint d'étanchéité 37 coopère toujours avec la bague tiroir 34, et le passage de fluide entre les deux éléments de raccord ainsi qu'entre le tiroir 34 et le corps mâle 8 est empêché.

Pendant le déplacement de la bague tiroir 34 jusqu'à cette prise de contact du nez 8 sur le deuxième joint 35, la bague tiroir 34 a reculé dans le corps femelle 26 le long de l'axe longitudinal X, entraînant les axes tiroir 44 vers l'arrière dans son mouvement. Les axes tiroir 44 sont déplacés dans les cavités 344, avec les patins 46 qui glissent parallèlement à la direction transversale Z au contact des surfaces actives 344a des cavités 344, surfaces orientées vers l'arrière de l'élément femelle B. Le levier 42 visible à la figure 1 est donc entraîné en rotation autour de son axe de rotation Y420 dans le sens antihoraire selon la flèche F1 à la figure 4. L'autre levier 42 (non visible sur les figures 1, 4, 5 et 7) est entraîné en rotation autour de son axe de rotation Y420 dans le sens horaire. Le pion 48 porté par chaque levier 42 décrit donc une courbe de rayon correspondant à la distance d1 autour de l'axe fixe 420, le long de la surface courbée 386b de la lumière 386 du piston. Comme le pion 48 est disposé, par rapport à l'axe tiroir 44, de l'autre côté du plan P420 passant par l'axe de rotation Y420, parallèle à l'axe X et perpendiculaire au plan de la figure 4, ce mouvement est dirigé vers l'avant de l'élément femelle de raccord B. La surface courbée 386b ayant un rayon de courbure centré sur l'axe fixe 420, ce mouvement du pion 48 n'a donc aucune action sur le piston 38, qui reste en position arrière. La surface 386b assure que pendant cette phase, le piston 38 est maintenu en position arrière contre la bague chape 36.

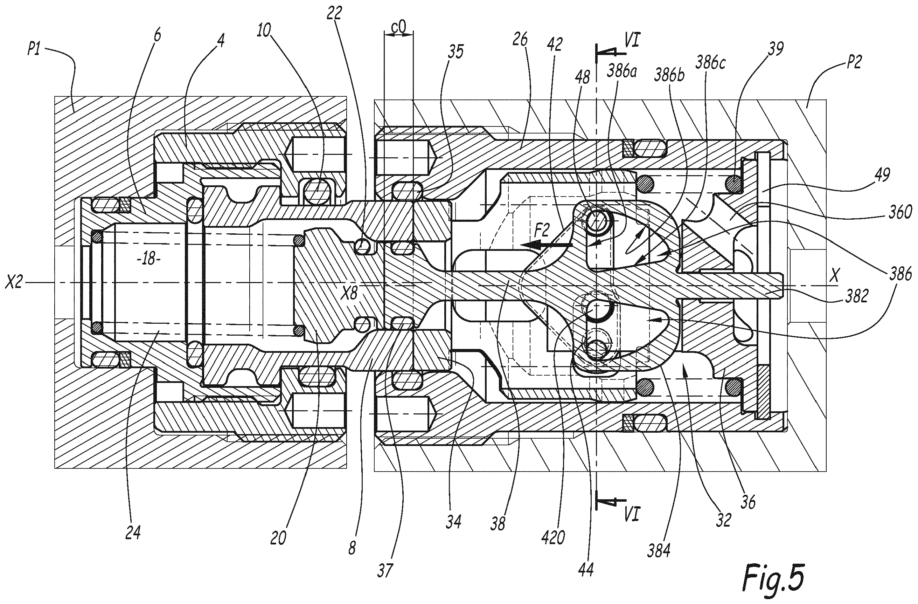

A la figure 5, lorsque les plaques P1 et P2 sont davantage rapprochées, le nez 8 est parvenu au-delà de la mi-longueur de la gorge 260, la mi-longueur étant considérée le long de l'axe X, et le deuxième joint 35 vient entourer radialement la surface radiale externe du nez 8, ce qui assure une étanchéité radiale entre le corps femelle 26 et le corps mâle 2. Dans cette configuration intermédiaire, le troisième joint d'étanchéité 37 coopère toujours avec le nez 8, le passage de fluide entre les deux éléments de raccord étant toujours empêché.

Le pion 48 a poursuivi son mouvement de courbe sous l'action du recul de la bague tiroir 34 et est parvenu au contact de la surface plane active 386a de la lumière 386 (Figure 5). Dans cette configuration, l'axe central Y48 du pion 48, l'axe de rotation Y420 de l'axe fixe 420 et l'axe central Y44 de l'axe tiroir 44 s'étendent dans un même plan, correspondant au plan de coupe VI, perpendiculaire à l'axe d'accouplement X. La bague tiroir 34 est dans une position décalée par rapport à sa position de fermeture, position décalée dans laquelle le corps mâle 2 coopère avec le deuxième joint 35 de manière que l'étanchéité entre le corps mâle 2 et le corps femelle 26 soit assurée par le deuxième joint, comme cela est expliqué plus haut.

La phase d'accouplement qui s'étend de la figure 1 jusqu'à la figure 5 permet un débrayage de la liaison entre les leviers 42 et le piston 38, donc une course morte c0 de la bague tiroir 34. En effet lors de cette phase, le levier 42 est embrayé avec le tiroir 34 mais débrayé du piston 38 et le déplacement axial de la bague tiroir 34 provoque la rotation du levier 42 mais ne provoque pas de déplacement axial du piston 38 qui reste en position arrière. La transformation du mouvement entre le piston 38 et la bague tiroir est donc débrayée de la configuration désaccouplée (figure 1) à la configuration intermédiaire (figure 5), dans laquelle l'étanchéité entre le corps mâle 2 et le corps femelle 26 est effective, sans que la circulation de fluide soit activée.

Lorsque le pion 48 coopère avec la surface courbée 386b et ne coopère pas avec une surface active du type 386a, un mouvement du levier 42 ne provoque pas de mouvement du piston 38 dans le corps femelle 26 : le levier 42 est débrayé du piston 38.

A partir de cette prise de contact entre les pions 48 et les surfaces active 386a, le déplacement vers l'arrière de la bague tiroir 34 entraîne toujours les axes tiroir 44 vers l'arrière et les leviers 42 en rotation autour des axes fixes 420, repoussant les pions 48 vers l'avant du corps femelle 26. Les pions 48 en appui sur les surfaces actives 386a repoussent le piston 38 vers l'avant, selon la flèche F2 à la figure 5. De la configuration intermédiaire (figure 5) à la configuration accouplée (figure 7), les leviers 42 sont donc embrayés à la fois avec le piston 38 et avec le tiroir 34, ce qui lie les mouvements de la bague tiroir 34 et du piston 38 selon l'axe longitudinal X.

Dans cette phase, chaque levier 42 est embrayé avec le piston 38 dans la mesure où le mouvement du levier 42 provoque le mouvement d'avance du piston 38.

Chaque axe central Y48 forme un axe d'articulation entre le levier 42 et le piston 38 lorsque le piston 38 est embrayé avec les leviers 42.

Du fait de la différence entre les distances d1 et d2, le mouvement de recul de la bague tiroir 34 est démultiplié, le mouvement d'avance du piston 38 étant plus important que le recul de la bague tiroir 34. Durant le mouvement du piston 38 dans le corps femelle 26 vers sa position avancée, le piston 38 reste guidé le long de l'axe longitudinal X par coopération de la tige de centrage 382 avec la bague chape 36 et par coopération avec la soupape 20.

Le rapprochement entre les plaques P1 et P2 se poursuit jusqu'à la mise en butée et le maintien en butée des deux plaques P1 et P2 le long de l'axe d'accouplement X, ou bien lorsqu'une butée non représentée maintient les deux plaques P1 et P2 à une distance d3 (figure 7).

A la figure 7, la bague tiroir 34 est en position d'ouverture et la configuration accouplée du raccord R est atteinte. Le piston 38 est parvenu dans sa position avancée et a parcouru depuis sa position arrière une course c38 supérieure à une course c34 parcourue par la bague tiroir 34 dans la même phase, qui lui permet d'écarter la soupape 20 et de s'écarter lui-même de la région avant 84 du nez 8 de manière suffisante pour permettre un passage pour le fluide entre le piston 38 et le nez 8. Dans la position avancée du piston 38, le joint d'étanchéité 37 n'est plus en contact avec le nez 8. Un écoulement E a donc lieu dans le conduit interne 18 de l'élément mâle A, le fluide s'écoulant autour de la soupape 20 par des passages non représentés, autour du piston 38, à l'intérieur de la bague tiroir 34, et dans les passages inclinés 360 de la bague chape 36, entre les deux conduits P1a et P2a portés par les plaques P1 et P2.

Il n'y a pas de butée au piston 38 vers l'avant en position avancée, la position avancée du piston 38 étant donnée par la position d'ouverture du tiroir 34 et la cinématique de transformation du mouvement du tiroir 34 en mouvement du piston 38 par les leviers 42.

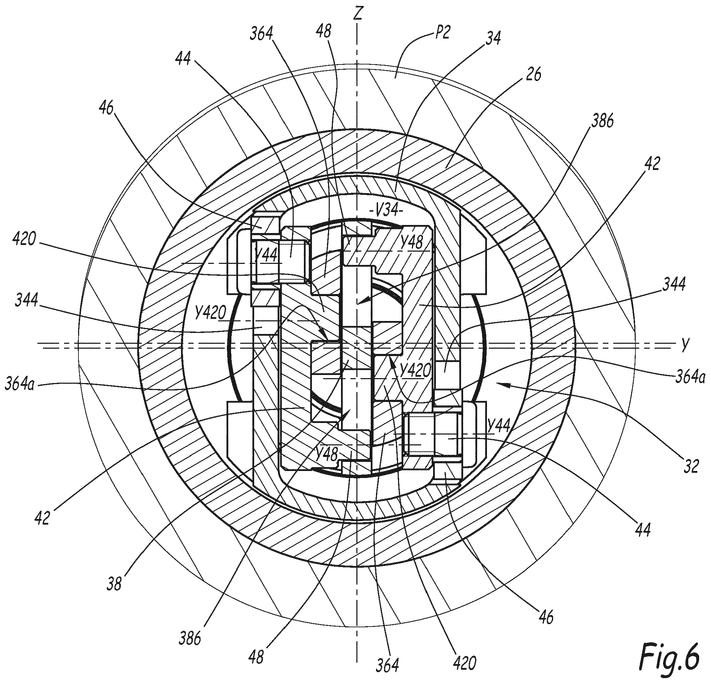

Entre la configuration intermédiaire (figure 5) et la configuration accouplée (figure 6), le piston 38 a parcouru une course 2,25 fois supérieure à la course parcourue par la bague tiroir 34 en sens inverse le long de l'axe longitudinal X, en particulier égal au rapport entre les distances d1 et d2.

Le désaccouplement se fait selon une séquence inversée, l'écartement des plaques P1 et P2 provoquant le mouvement d'avance de la bague tiroir 34 dans le corps femelle 26 sous l'effet du ressort 39, et donc le mouvement vers l'avant des axes tiroir 44, et le pivotement du levier 42 visible à la figure 7 dans le sens horaire (l'autre levier 42 non visible pivotant dans le sens antihoraire) car les leviers 42 sont embrayés avec la bague tiroir 34. Chaque patin 46 vient au contact d'une surface active 344b de la cavité 344 correspondante, la surface active 344b étant orientée vers l'avant de l'élément femelle B. La soupape 20 repoussée par le ressort 24, vers sa position de fermeture, participe au mouvement de recul du piston 38, ce qui maintient continuellement les surfaces actives 386a en contact avec les pions 48 qui reculent. La bague tiroir 34 et le piston 38 sont donc toujours embrayés avec les leviers 42, et le mouvement des leviers 42 provoque le recul du piston 38. Le recul du piston 38 a lieu avec la même démultiplication de course que lors de l'accouplement jusqu'à la position arrière du piston 38 en butée contre la bague chape 36, dans laquelle le corps femelle 26 et le corps mâle coopèrent de façon étanche par le deuxième joint 35. Puis la bague tiroir 34 poursuit son mouvement vers sa position de fermeture sous l'effet du ressort 39. Les leviers 42 sont à présent débrayés du piston 38, tout en restant embrayés avec le tiroir 34, avec chaque pion 48 qui suit la surface courbée 386b de la lumière 386 dans laquelle il se déplace. Chaque levier 42 étant embrayé avec la bague tiroir 34, le mouvement de la bague tiroir 34 provoque le mouvement des leviers 42. Chaque levier 42 étant débrayé du piston 38, le mouvement des leviers 42 ne provoque pas de mouvement de recul du piston 38 et le piston 38 reste donc en position arrière. La bague tiroir 34 reprend l'étanchéité avec le corps femelle 26 via le deuxième joint 35 et avec le piston 38 via le troisième joint 37. La soupape 20 reprend l'étanchéité avec le corps mâle 2 au niveau du troisième joint 22. Enfin, la bague tiroir 34 parvient en position de fermeture et la soupape 20 parvient en position de fermeture.

La mobilité axiale du piston 38 par rapport au corps femelle 26 permet de donner une course suffisante au déplacement du piston 38, même en cas de courses d'accouplement faibles, et donc de courses faibles de la bague tiroir 34, pour un passage de fluide suffisant.

Le rapprochement des deux éléments de raccord provoque de manière automatique le mouvement de la bague tiroir 34 par coopération avec le nez 8, et de ce fait le mouvement du piston 38 quand les leviers 42 sont embrayés à la fois avec la bague tiroir 34 et avec le piston 38.

La séquence d'accouplement permet que le piston 38 soit mis en mouvement uniquement à partir d'une position décalée de la bague tiroir 34 à partir de laquelle le dispositif de transformation de mouvement assurera l'étanchéité entre le corps mâle 2 et le corps femelle 26 avant la perte d'étanchéité entre le tiroir 34 et le piston 38. Ceci est permis par la course morte c0 de la bague tiroir 34 sans mouvement du piston 38 lorsque les leviers 42 sont débrayés du piston 38, pour permettre l'étanchéité lors du raccordement puis un entraînement du piston 38 vers l'avant par le recul de la bague tiroir 34 au-delà de la course morte.

Le dispositif de transformation de mouvement, comprenant les leviers 42 et les coopérations entre les pions 48 et les lumières 386, est compact. En particulier, la configuration dans laquelle les axes centraux Y48, Y420 et Y44 du pion 48, de l'axe fixe 420 et de l'axe tiroir 44 associés à un levier 42 sont coplanaires est particulièrement peu encombrante dans la direction longitudinale.

La coopération entre la bague tiroir 34 et les leviers 42 par les axes tiroir 44 et les cavités 344, qui ne comportent pas de portion longitudinale (les patins 46 étant mobiles dans les cavités 344 uniquement perpendiculairement à l'axe longitudinal X), limite les risques de coincements lors du mouvement des axes tiroir 44 vers l'arrière.

L'arrangement du piston 38 entre les flasques 364 de la bague chape 36, qui est fixe par rapport au corps femelle 26, limite les frottements et la déformation du piston 38 lors du pivotement des leviers 42.

La forme externe triangulaire de chaque levier 42 limite les possibilités de rotation de la bague tiroir 34 autour de l'axe longitudinal X par rapport au corps femelle 26 et au piston 38 en configuration désaccouplée et en cours d'accouplement ou de désaccouplement. En effet cette forme triangulaire fournit aux leviers 42 des faces latérales 422 et 424 avec une aire plus importante que si les leviers 42 étaient de simples éléments allongés. Ces faces 422 et 424 permettent une coopération surfacique étendue avec les faces internes 342, ce qui limite les potentielles rotations de la bague tiroir 34.

Les lumières 386 de forme triangulaire (et non en forme de « V » le long du passage du pion 48 dans la lumière 386) limite les coincements dans le mouvement de retour du piston 38 vers sa position arrière.

Le guidage du piston 38 dans son mouvement longitudinal par son appui avec la soupape 20 et son engagement dans la bague chape 36 (par le logement 362) sur l'ensemble de sa course de mouvement axial évite les coincements du piston 38.

En configuration désaccouplée, les joints d'étanchéité 22, 35 et 37 sont protégés, c'est-à-dire masqués par rapport à l'environnement extérieur des éléments mâle et femelle du raccord R, ce qui réduit les risques d'altération de ces joints par un environnement pollué.

Au désaccouplement, les ressorts 39 et 24, qui repoussent respectivement la bague tiroir 34 et la soupape 20 vers leur positions de fermeture, assurent également le rappel des leviers 42 et du piston 38 vers les positions qu'ils occupent en configuration désaccouplée. Aucun ressort ou élément élastique additionnel n'est nécessaire entre les leviers 42 et le corps femelle 26 pour obtenir le mouvement des leviers 42 permettant le retour du piston 38 vers sa position arrière.

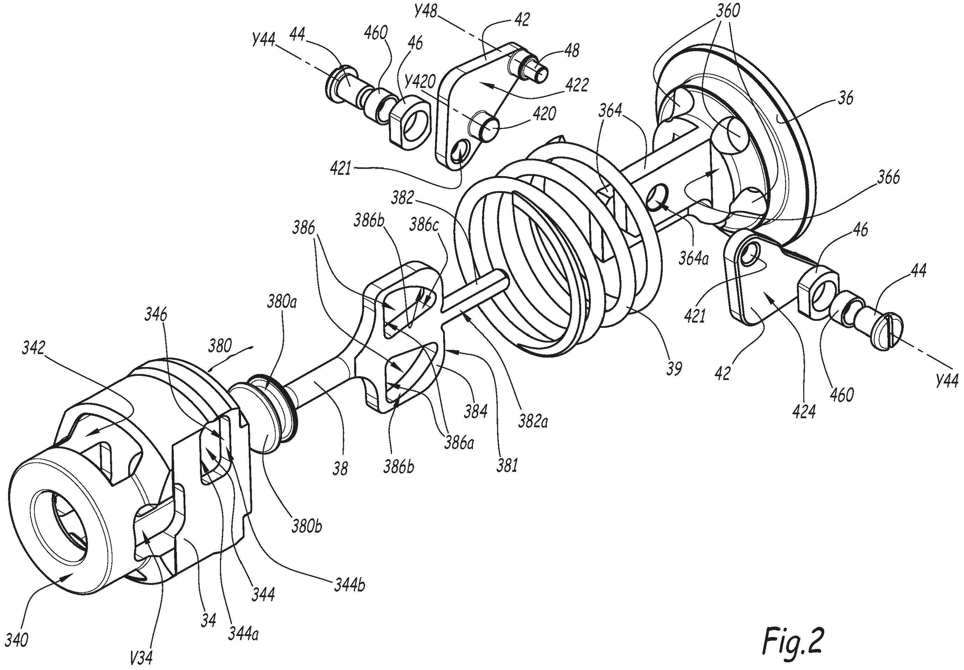

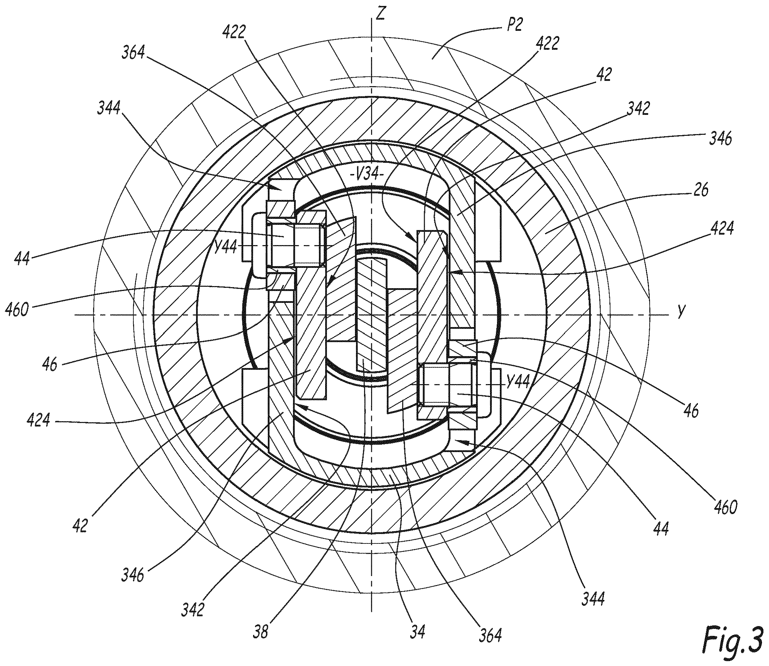

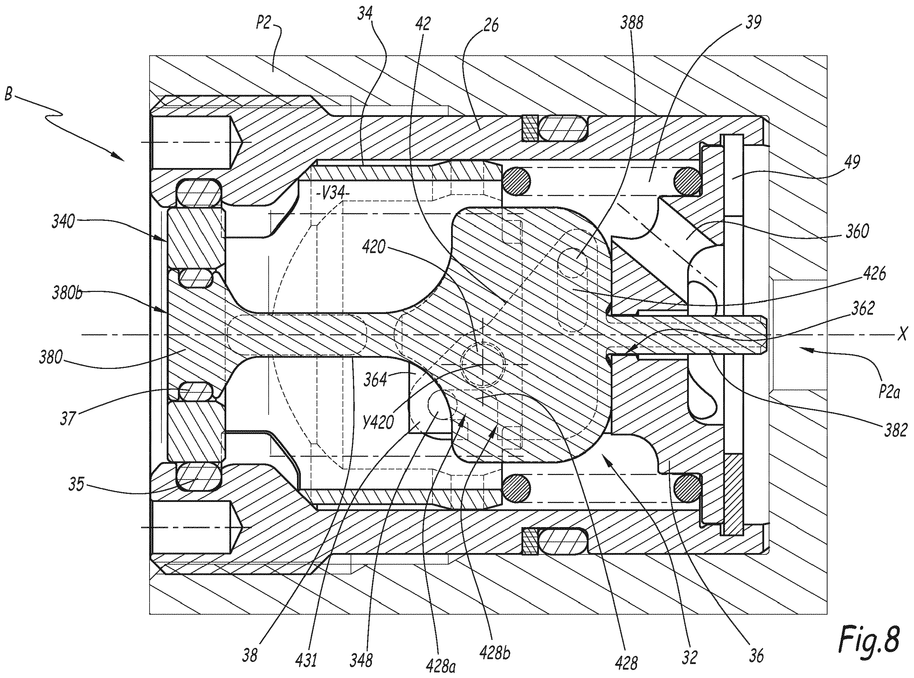

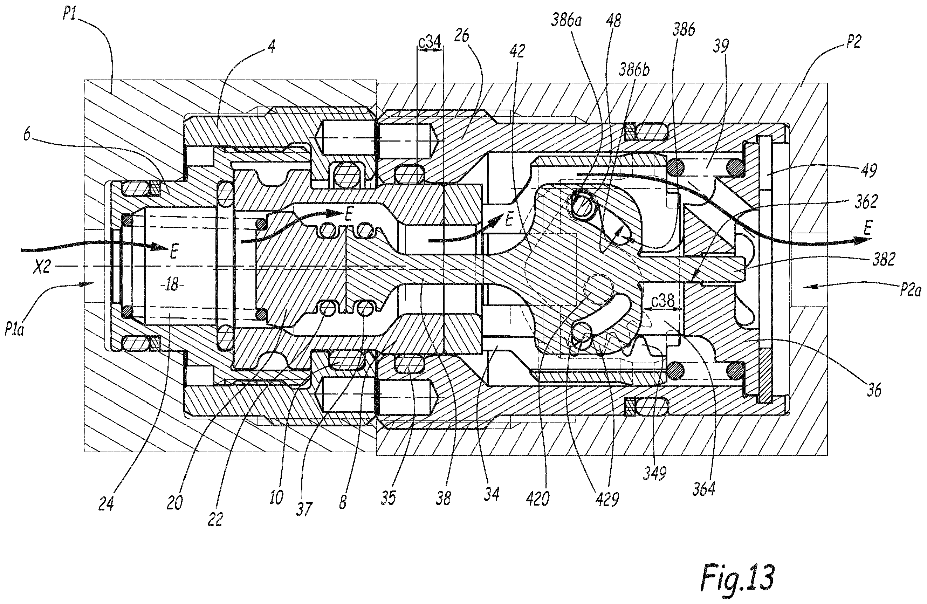

Un deuxième et un troisième mode de réalisation de l'invention sont représentés sur les figures 8 à 13. Dans ces modes de réalisation, les éléments communs au premier mode de réalisation portent les mêmes références et fonctionnent de la même manière. Seules les différences par rapport au mode de réalisation des figures 1 à 7 sont détaillées ci-après.

Dans le mode de réalisation des figures 8 à 10, la structure des coopérations entre les axes tiroir et la bague tiroir 34, et entre le piston 38 et les pions est inversée. Le piston 38 porte un pion 388 (jouant le rôle du pion 48) engagé dans une lumière 426 du levier 42, et la bague tiroir 34 porte un axe tiroir 348 (jouant le rôle de l'axe tiroir 44) engagé dans une cavité 428 du levier 42. La cavité 428 présente une portion glissante 428a qui s'étend longitudinalement dans la configuration désaccouplée, et une surface active 428b qui s'étend de façon inclinée par rapport à la portion glissante 428a. En particulier, en configuration désaccouplée, la surface active 428b s'étend orthogonalement à l'axe longitudinal X.

En configuration désaccouplée, le piston 38 est en position arrière et l'axe central Y388 du pion 388, l'axe de rotation Y420 de l'axe fixe 420, l'axe central Y348 de l'axe tiroir 348 associés à un même levier 42 sont parallèles et s'étendent dans un même plan.

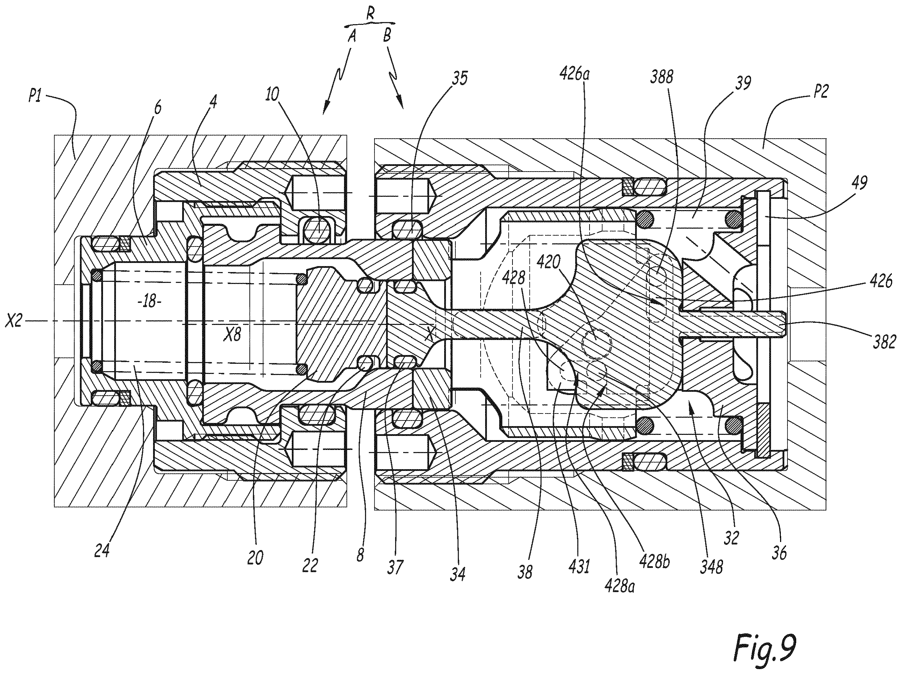

Lors de l'accouplement, chaque axe tiroir 348 recule le long de l'axe X de façon solidaire avec la bague tiroir 34 sans action sur le levier 42 associé, car chaque axe tiroir 348 se déplace de façon glissante dans la portion glissante 428a de la cavité 428, qui s'étend longitudinalement et donc parallèlement à la direction de mouvement de la bague tiroir 34. Il n'y a donc pas de pivotement de chacun des leviers 42 lors de toute la phase d'accouplement dans laquelle chaque axe tiroir 348 se déplace dans la portion glissante 428a, de la configuration désaccouplée (figure 8) à la configuration intermédiaire (figure 9). Les leviers 42 sont donc débrayés de la bague tiroir 34 dans cette phase et le mouvement du tiroir 34 ne provoque pas de mouvement des leviers 42, et donc de mouvement du piston 38.

A la figure 9, lorsque ou après que le corps mâle 2 coopère avec le joint d'étanchéité 35 de manière que l'étanchéité entre le corps mâle 2 et le corps femelle 26 soit réalisée au moyen du joint d'étanchéité 35, dans une position décalée de la bague tiroir 34 par rapport à sa position de fermeture, chaque axe tiroir 348 est en butée contre la surface active 428b de la cavité 428, et le recul de la bague tiroir 34 provoque le pivotement des leviers 42. A partir de ce moment, les leviers 42 sont embrayés avec la bague tiroir 34 tout en restant embrayés avec le piston 38. Le mouvement du tiroir 34 provoque le mouvement de chacun des leviers 42 et le mouvement de chacun des leviers 42 provoque le mouvement du piston 38.

L'axe tiroir 348 se déplace contre la surface active 428b et entraîne le levier 42 en rotation autour de l'axe de rotation Y420 (dans le sens antihoraire de la figure 9 pour le levier 42 visible sur les figures 8 à 10). La surface active 428b s'incline progressivement par rapport à l'axe longitudinal X du fait du pivotement du levier 42.

Dans le même temps, la lumière 426, qui est initialement perpendiculaire à l'axe longitudinal X sur les figures 8 et 9, s'incline progressivement, entrainant un mouvement d'avance du pion 388 engagé dans cette lumière 426, par contact du pion 388 avec une surface active 426a de cette lumière 426. L'avance du piston 38 par rapport au corps femelle 26 jusqu'à sa position avancée est alors obtenue.

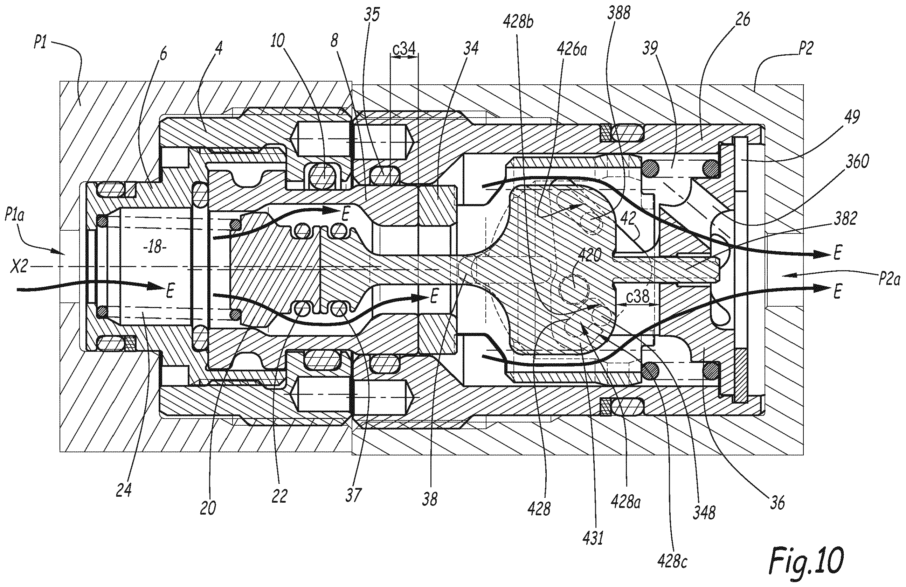

Au désaccouplement, le mouvement de recul du tiroir 34 provoque le mouvement de l'axe tiroir 348 en direction de la portion glissante 428a, au contact d'une surface active 428c de la cavité 428 faisant face à la surface active 428b. Le levier 42 de la figure 10 est entraîné en rotation autour de l'axe Y420. Le pion 388 au contact d'une surface active de la lumière 426 est entraîné vers l'arrière, ce qui entraîne le piston 38 vers sa position arrière.

En variante non représentée, les leviers 42 peuvent ne porter qu'une cavité délimitant la surface active 428b pour l'axe tiroir 348, au lieu d'une cavité 428 bornée sur l'avant par une portion 431 recourbée vers l'arrière. L'élément femelle B comporterait alors un moyen de rappel élastique de chaque levier 42 qui rappellerait le levier 42 vers sa position initiale correspondant à la configuration désaccouplée et le maintiendrait dans cette position pendant le déplacement de l'axe tiroir 348 dans la portion glissante 428a à l'accouplement. Ce moyen de rappel serait formé par un ressort additionnel interposé entre le corps femelle et le levier 42.

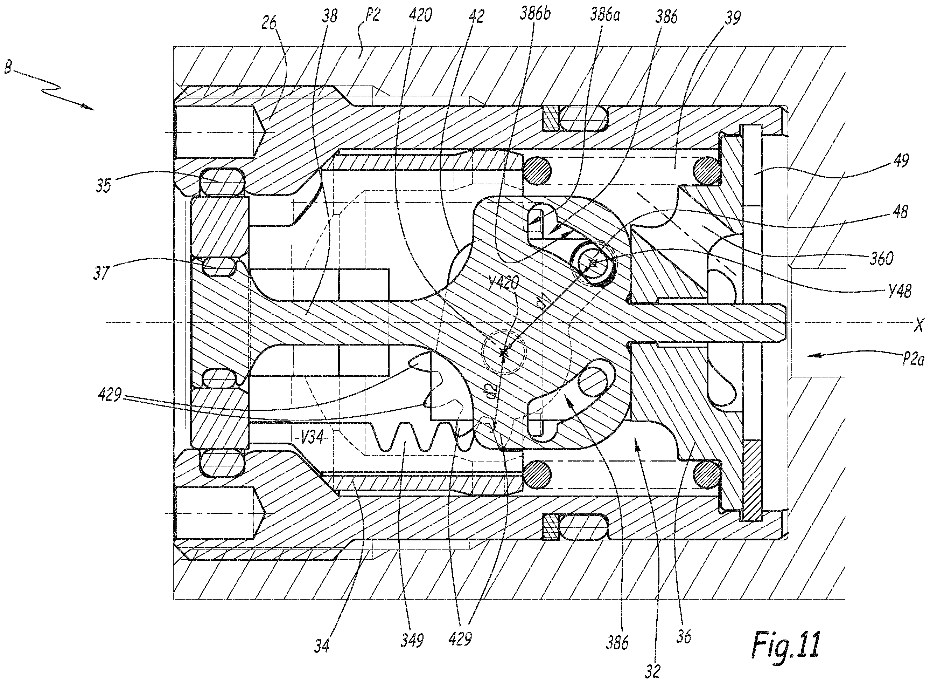

Dans le mode de réalisation des figures 11 à 13, le mode de transformation du mouvement entre la bague tiroir 34 et les leviers 42 est différent de celui des figures 1 à 7. La bague tiroir 34 est équipée d'une crémaillère 349 qui coopère avec des dents 429 formées autour de l'axe fixe 420 sur le levier 42. Les dents 429 sont placées le long d'un arc de cercle centré sur l'axe de rotation Y420 et s'étendent de façon radiale par rapport à l'axe de rotation Y420. Lorsque la bague tiroir 34 recule, la coopération entre la crémaillère 349 et les dents 429 provoque la rotation du levier 42 autour de l'axe de rotation Y420 (dans le sens antihoraire de la figure 11 pour le levier 42 visible sur les figures 11 à 13). La bague tiroir 34 et les leviers 42 sont embrayés et le mouvement du tiroir 34 provoque le mouvement des leviers 42.

Dans ce mode de réalisation la distance d2 est mesurée entre l'axe fixe 420 et les points de contact entre les dents 429 et les dents de la crémaillère 349.

Sur les figures 11 à 13, les lumières 386 du piston 38 ont une formé courbée. En variante, les lumières 386 peuvent avoir une forme triangulaire similaire à celle des figures 1 à 7. Chaque lumière 386 coopère avec un pion 48 solidaire du levier 42.

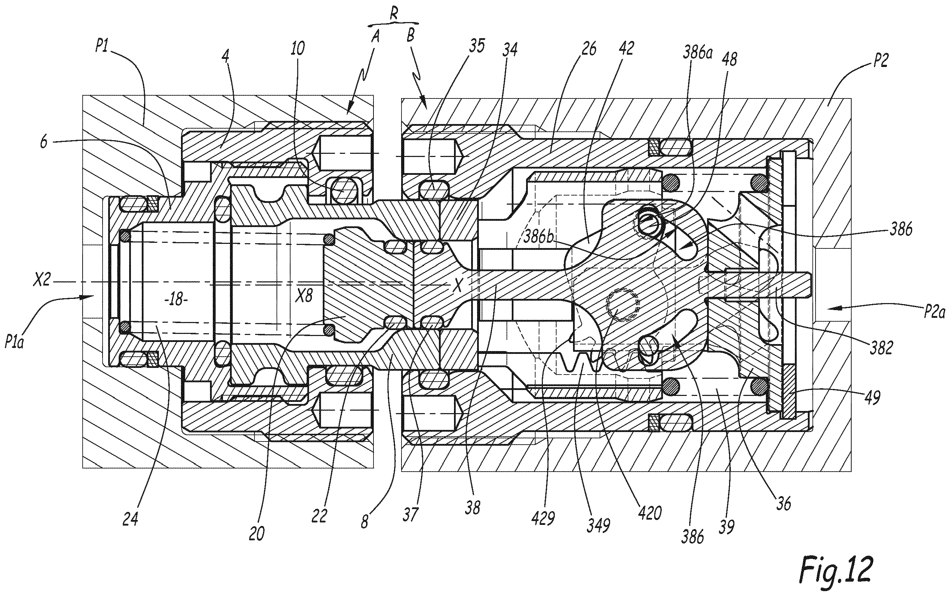

Dans la phase d'accouplement, tant que le pion 48 suit la surface courbée 386b de la lumière 386, centrée sur l'axe de rotation Y420, le levier 42 est débrayé du piston 38 et le piston 38 reste en position arrière. Dès que le pion 48 parvient au contact de la surface active 386a, dans la configuration intermédiaire de la figure 12 (après que ou lorsque l'étanchéité entre le corps mâle 2 et le corps femelle 26 est effective) dans laquelle la bague tiroir 34 est dans une position décalée par rapport à sa position de fermeture, le levier 42 est embrayé avec le piston 38 tout en restant embrayé avec la bague tiroir 34 et la rotation du levier 42 par le recul de la bague tiroir 34 entraîne le mouvement du piston 38 vers l'avant.

Dans tous les modes de réalisation, la course morte c0 est non nulle, par exemple de l'ordre de 2mm pour une course totale du tiroir 34 de l'ordre de 4mm, et la position décalée du tiroir 34 à partir de laquelle le levier 42 est embrayé à la fois avec le tiroir 34 et le piston 38 est distincte de la position de fermeture du tiroir 34.

En variante non représentée, la crémaillère peut équiper le piston 38 alors que la liaison entre la bague tiroir 34 et le levier 42 est assurée par une coopération pion/lumière similaire à celle des figures 8 à 10.

Selon d'autres variantes non représentées :
- L'élément femelle B peut ne comprendre qu'un seul levier 42 assurant la transformation du mouvement de recul de la bague tiroir 34 en mouvement d'avance du piston 38.
- Le mouvement du piston 38 vers l'avant peut être initié avant la coopération radiale du joint 35 avec le corps mâle 2, en particulier lorsque, en configuration désaccouplée, le bord avant de la gorge externe 380a n'est pas aligné axialement mais en arrière par rapport au bord avant de la gorge interne 260. Il est possible alors d'embrayer le ou les leviers 42 avec le tiroir 34 et avec le piston 38 à partir d'une position décalée du tiroir 34, pour laquelle le joint 35 ne coopère pas encore avec le nez 8 et l'étanchéité corps mâle/corps femelle n'est pas encore effective, mais qui garantit que, malgré son mouvement d'avance provoqué par le mouvement de recul du tiroir 34, le piston 38 quittera son contact étanche avec le tiroir 34 alors que l'étanchéité corps mâle/corps femelle sera devenue effective.
- Les deux lumières 386 ménagées sur le piston 38 peuvent communiquer et ne former qu'une seule et même lumière (pas de surfaces 386c).
- Le levier 42 peut comprendre le pion 48 et une lumière pour l'axe tiroir 44, ou bien le levier 42 peut comprendre l'axe tiroir 44 et une lumière dans laquelle le pion 48 se déplace.
- Par l'emploi d'une cavité de type 428 et d'une lumière de type 386 aux géométries adaptées dans un même élément de raccord, le levier 42 peut être débrayé du tiroir 34 et du piston 38de la position de fermeture jusqu'à une première position du tiroir 34 puis uniquement du piston 38 de la première position jusqu'à une position décalée du tiroir 34 de coopération du corps mâle 2 avec le deuxième joint 35.
- La surface active 386a a été décrite comme étant rectiligne et s'étendant dans un plan perpendiculaire à l'axe longitudinal X en configuration désaccouplée mais elle peut être inclinée par rapport au plan perpendiculaire à l'axe longitudinal X en configuration désaccouplée ou elle peut être courbée pour une démultiplication progressive du mouvement de la bague tiroir 34.
- Le troisième joint 37 de l'élément femelle B peut être logé dans la bague tiroir 34.
- Le troisième joint 22 de l'élément mâle A peut être logé dans le corps mâle 2.
- Dans le cas où le corps femelle 26 loge plusieurs joints d'étanchéité en parallèle pour assurer l'étanchéité entre le corps mâle 2 et le corps femelle 26, c'est la position de la bague tiroir 34 décalée par rapport au joint d'étanchéité situé le plus près de l'embouchure du corps femelle 26 qui doit être considérée pour autoriser le déplacement du piston 38.
- A la place du patin 46, on peut prévoir un galet autour de l'axe tiroir 44. Ce galet coopère par contact avec la surface active 344a. De même, le pion 48 peut coopérer avec la lumière 386 dans laquelle il se déplace par l'intermédiaire d'un galet monté sur le pion 48 apte à venir en contact avec la surface active 386a de la lumière 386.

L'invention a été décrite avec des raccords pour plaques (cet arrangement ne comporte pas d'organes de verrouillage intégrés aux éléments du raccord) mais elle peut être mise en oeuvre sur des éléments de raccord avec organes de verrouillage (par exemple de type billes, doigts, griffes, segments, etc.).

## Revendications

1. Raccord fluidique (R) comprenant un élément mâle (A) de raccord et un élément femelle (B) de raccord apte à s'emmancher l'un dans l'autre, l'élément mâle (A) comprenant :
- un corps mâle (2) définissant un conduit interne (18),
- une soupape (20), mobile par rapport au corps mâle (2) entre une position d'ouverture et une position de fermeture étanche du conduit interne (18) du corps mâle (2),
- un ressort (24) repoussant la soupape (20) vers sa position de fermeture,
et l'élément femelle (B) de raccord comprenant :
- un corps femelle (26) définissant un conduit interne (32) le long d'un axe central longitudinal (X) et comportant au moins un joint d'étanchéité (35),
- un piston (38) s'étendant selon l'axe central longitudinal (X),
- un tiroir (34) monté autour du piston (38) et mobile par rapport au corps femelle (26) selon l'axe central longitudinal (X) entre une position de fermeture, dans laquelle le joint d'étanchéité (35) du corps femelle (26) coopère avec le tiroir (34) et le tiroir (34) coopère de manière étanche avec le piston (38), et une position reculée d'ouverture du conduit interne (32) du corps femelle (26),
dans une phase d'accouplement entre l'élément mâle (A) et l'élément femelle (B), le corps mâle (2) repousse le tiroir (34) vers sa position d'ouverture et le piston (38) repousse la soupape (20) vers sa position d'ouverture,
le raccord (R) étant **caractérisé en ce que** :
- le piston (38) est monté avec possibilité de déplacement par rapport au corps femelle (26) le long de l'axe central longitudinal (X) entre une position arrière et une position avancée,
- l'élément femelle (B) comprend au moins un levier (42) de transformation du mouvement du tiroir (34) en déplacement du piston (38),
- au cours de la phase d'accouplement :
de la position de fermeture du tiroir (34) à une position décalée du tiroir (34), dans laquelle le corps mâle (2) coopère avec le joint d'étanchéité (35) du corps femelle (26), le ou chaque levier (42) est débrayé du tiroir (34) et/ou du piston (38), et le piston (38) est en position arrière ;
de la position décalée du tiroir (34) à la position d'ouverture du tiroir (34), le levier (42) est embrayé avec le tiroir (34) et avec le piston (38), et déplace le piston (38) vers sa position avancée ;
- en configuration accouplée, le piston (38) est dans sa position avancée et s'étend en partie dans le corps mâle (2), un passage de fluide (E) étant formé autour du piston (38) dans le corps mâle (2).

2. Raccord fluidique selon la revendication 1, **caractérisé en ce que** le levier (42) est monté mobile en rotation autour d'un axe de rotation (Y420) fixe par rapport au corps femelle (26).

3. Raccord fluidique selon l'une des revendications précédentes, **caractérisé en ce que** le levier (42) coopère avec le piston (38) par un pion (48, 388) se déplaçant dans une lumière (386 ; 426), et **en ce que** le levier (42) est embrayé avec le piston (38) par coopération du pion (48 ; 388) avec une surface active (386a ; 426a) de la lumière (386 ; 426).

4. Raccord fluidique selon les revendications 2 et 3, **caractérisé en ce que** entre la position de fermeture et la position décalée du tiroir, le levier (42) est débrayé du piston (38) et le pion (48) est en mouvement dans la lumière (386) le long d'une surface courbée (386b) de la lumière (386), centrée sur l'axe de rotation (Y420) du levier (42).

5. Raccord fluidique selon l'une des revendications précédentes, **caractérisé en ce que** le tiroir (34) coopère avec le levier (42) par un axe tiroir (44 ; 348) se déplaçant dans une cavité (344 ; 428), et **en ce que** le levier (42) est embrayé avec le tiroir (34) par coopération de l'axe tiroir (44 ; 348) avec une surface active (344a, 344b ; 428b, 428c) de la cavité (344 ; 428).

6. Raccord fluidique selon l'une des revendications précédentes, **caractérisé en ce que**, entre la position de fermeture et la position décalée du tiroir (34), le levier (42) est débrayé du tiroir (34) et **en ce que** le tiroir (34) coopère avec le levier (42) par un axe tiroir (348) se déplaçant dans une cavité (428) comprenant une portion glissante (428a) longitudinale dans laquelle l'axe tiroir (348) se déplace lorsque le levier (42) est débrayé du tiroir (34), et une surface active (428b) inclinée par rapport à la portion glissante (428a), avec laquelle l'axe tiroir (348) coopère lorsque le levier (42) est embrayé avec le tiroir (34).

7. Raccord fluidique selon l'une des revendications précédentes, **caractérisé en ce que** le rapport entre une course (c38) de déplacement axial du piston (38) entre sa position arrière et sa position avancée et une course (c34) de déplacement axial du tiroir (34) entre sa position décalée et sa position d'ouverture en configuration accouplée est au moins égal à 1,2, de préférence au moins égal à 2,25.

8. Raccord fluidique selon l'une des revendications précédentes, **caractérisé en ce que** le piston (38) s'étend le long de l'axe central longitudinal (X), et **en ce que** l'élément femelle (B) comprend deux leviers (42) disposés de part et d'autre de l'axe central longitudinal (X), chacun des leviers (42) coopérant avec le piston (38) par un pion (48) se déplaçant dans une lumière (386) du piston (38), chacun des leviers (42) coopérant avec le tiroir (34) par un axe tiroir (44) se déplaçant dans une cavité (344) du tiroir (34), et chacun des leviers (42) comprenant un axe fixe (420) monté pivotant dans un logement (364a) solidaire du corps femelle (26) selon l'axe central longitudinal (X) .

9. Raccord fluidique selon la revendication 8, **caractérisé en ce que** pour chaque levier (42), dans une configuration embrayée avec le piston (38) et avec le tiroir (34), le rapport entre la distance (d1) entre l'axe de rotation (Y420) fixe et un axe central (Y48) du pion (48) et la distance (d2) entre l'axe de rotation (Y420) fixe et un axe central (Y44) de l'axe tiroir (44) est strictement supérieur à 1,2, de préférence supérieur ou égal à 2.

10. Raccord fluidique selon l'une des revendications précédentes, **caractérisé en ce que** le tiroir (34) est formé par une bague délimitant un volume intérieur (V34) dans lequel sont montés le ou les leviers (42) et le piston (38).

11. Raccord fluidique selon l'une des revendications précédentes, **caractérisé en ce que** le piston (38) comprend une tige arrière (382) de centrage et **en ce que**, dans toutes les positions du piston (38) dans son déplacement par rapport au corps femelle (26), la tige arrière (382) est engagée dans un logement de guidage (362) solidaire du corps femelle (26).

12. Raccord fluidique selon l'une des revendications précédentes, **caractérisé en ce qu'**il comprend une bague chape (36) montée solidaire du corps femelle (26) selon l'axe central longitudinal (X), et **en ce que** la bague chape (36) comprend au moins un flasque (364) qui s'étend selon l'axe central longitudinal (X) et qui coopère latéralement avec le piston (38) et le levier (42).

13. Raccord fluidique selon la revendication 12, **caractérisé en ce que** la bague chape (36) forme une butée arrière au piston (38) dans sa position arrière.

14. Raccord fluidique selon l'une des revendications précédentes, **caractérisé en ce que** le ou chaque levier (42) est de forme externe triangulaire.

15. Raccord fluidique selon l'une des revendications précédentes, **caractérisé en ce que** le corps mâle (2) comprend un nez (8) monté avec possibilité de mouvement, transversalement à l'axe central longitudinal (X), par rapport à une autre partie (4, 6) du corps mâle (2).

## Patentansprüche

1. Fluidkupplung (R), die ein Kupplungseinsteckelement (A) und ein Kupplungsaufnahmeelement (B) aufweist, die geeignet sind, ineinander gesteckt zu werden, wobei das Einsteckelement umfasst:
- einen Einsteckkörper (2), der einen Innenkanal (18) definiert,
- ein Ventil (20), das in Bezug auf den Einsteckkörper (2) zwischen einer Offenstellung und einer dichten Verschlussstellung in Bezug auf den Innenkanal (18) des Einsteckkörpers (2) beweglich ist,
- eine Feder (24), die das Ventil (20) in seine Verschlussstellung drückt,
und das Kupplungsaufnahmeelement (B) umfasst:
- einen Aufnahmekörper (26), der einen entlang einer mittleren Längsachse (X) liegenden Innenkanal (32) definiert und mindestens eine Dichtung (35) aufweist,
- einen Kolben (38), der sich gemäß der mittleren Längsachse (X) erstreckt,
- einen Schieber (34), der um den Kolben (38) herum montiert ist und in Bezug auf den Aufnahmekörper (26) gemäß der mittleren Längsachse (X) zwischen einer Verschlussposition, in der die Dichtung (35) des Aufnahmekörpers (26) mit dem Schieber (34) zusammenwirkt und der Schieber (34) in abdichtender Weise mit dem Kolben (38) zusammenarbeitet, und einer zurückgezogenen Öffnungsposition bezüglich des Innenkanals (32) des Aufnahmekörpers (26) beweglich ist,
in einer Kupplungsphase zwischen dem Einsteckelement (A) und dem Aufnahmeelement (B) der Einsteckkörper (2) den Schieber (34) in seine Öffnungsposition drückt und der Kolben (38) das Ventil (20) in seine Offenstellung drückt,
wobei die Kupplung (R) **dadurch gekennzeichnet ist, dass**:
- der Kolben (38) mit der Möglichkeit der Bewegung in Bezug auf den Aufnahmekörper (26) entlang der mittleren Längsachse (X) zwischen einer hinteren Position und einer vorgerückten Position montiert ist,
- der Aufnahmekörper (B) mindestens einen Hebel (42) zum Umsetzen der Bewegung des Schieber (34) in eine Verschiebung des Kolbens (38) umfasst,
- während der Kupplungsphase:
von der Verschlussposition des Schiebers (34) in eine Versetzungsposition des Schiebers (34), in der der Einsteckkörper (2) mit der Dichtung (35) des Aufnahmekörpers (26) zusammenarbeitet, der oder jeder Hebel (42) von dem Schieber (34) und/oder vom Kolben (38) entkuppelt ist und der Kolben (38) in seiner hinteren Position ist,
von der Versetzungsposition des Schieber (34) in die Öffnungsposition des Schiebers (34) der Hebel (42) mit dem Schieber (34) und mit dem Kolben (38) verkuppelt ist und den Kolben (38) in seine vorgerückte Position verschiebt;
- in der gekuppelten Konfiguration der Kolben (38) in seiner vorgerückten Position ist und sich teilweise in den Einsteckkörper (2) erstreckt, wobei ein Fluiddurchgang (E) in dem Einsteckkörper (2) um den Kolben (38) herum gebildet wird.

2. Fluidkupplung nach Anspruch 1, **dadurch gekennzeichnet, dass** der Hebel (42) drehbeweglich um eine Drehachse (Y420) montiert ist, die in Bezug auf den Aufnahmekörper (26) fest ist.

3. Fluidkupplung nach einem der vorhergehenden Ansprüche, **dadurch gekennzeichnet, dass** der Hebel (42) mit dem Kolben (38) über einen Ansatz (48, 388) zusammenarbeitet, der sich in einem Lumen (386; 426) verschiebt, und dass der Hebel (42) mit dem Kolben (38) über Zusammenarbeit mit dem Ansatz (48; 388) mit einer aktiven Fläche (386a; 426a) des Lumens (386; 426) gekuppelt ist.

4. Fluidkupplung nach Anspruch 2 und 3, **dadurch gekennzeichnet, dass** zwischen der Verschlussposition und der Versetzungsposition des Schiebers der Hebel (42) von dem Kolben (38) freigesetzt ist und der Ansatz (48) in dem Lumen (386) entlang einer gekrümmten Fläche (386b) des Lumens (386), zentriert auf die Drehachse (Y420) des Hebels (42), in Bewegung ist.

5. Fluidkupplung nach einem der vorhergehenden Ansprüche, **dadurch gekennzeichnet, dass** der Schieber (34) mit dem Hebel (42) durch eine in einem Hohlraum (344; 428) beweglichen Schieberachse (44; 348) zusammenarbeitet und dass der Hebel (42) mit dem Schieber (34) durch Zusammenarbeit der Schieberachse (44; 348) mit einer aktiven Fläche (344a, 344b; 428b, 428c) des Hohlraums (344; 428) gekuppelt ist.

6. Fluidkupplung nach einem der vorhergehenden Ansprüche, **dadurch gekennzeichnet, dass** zwischen der Verschlussposition und der Versetzungsposition des Schiebers (34) der Hebel (42) von dem Schieber (34) freigesetzt ist und dass der Schieber (34) mit dem Hebel (42) über eine Schieberachse (348) zusammenwirkt, die sich in einem Hohlraum (428) bewegt, der einen längsgerichteten Gleitabschnitt (428a), in dem die Schieberachse (148) sich verschiebt, wenn der Hebel (42) bezüglich des Schiebers (34) freigesetzt ist, und eine aktive Fläche (428b), die in Bezug auf den Gleitabschnitt (428a) geneigt ist und mit der die Schieberachse (348) zusammenarbeitet, wenn der Hebel (42) mit dem Schieber (34) gekuppelt ist, umfasst.

7. Fluidkupplung nach einem der vorhergehenden Ansprüche, **dadurch gekennzeichnet, dass** das Verhältnis zwischen dem axialen Bewegungsweg (c38) des Kolbens (38) zwischen seiner hinteren Position und seiner vorgerückten Position und dem axialen Bewegungsweg (c34) des Schiebers (34) zwischen seiner Versetzungsposition und seiner Öffnungsposition in der gekuppelten Konfiguration mindestens gleich 1,2, vorzugsweise mindestens gleich 2,25 ist.

8. Fluidkupplung nach einem der vorhergehenden Ansprüche, **dadurch gekennzeichnet, dass** der Kolben (38) sich entlang der mittleren Längsachse (X) erstreckt und dass das Aufnahmeelement (B) zwei Hebel (42) umfasst, die beidseitig der mittleren Längsachse (X) angeordnet sind, wobei jeder der Hebel (42) mit dem Kolben (38) durch einen Ansatz (48) zusammenarbeitet, der sich in einem Lumen (386) des Kolbens (38) bewegt und jeder der Hebel (42) mit dem Schieber (34) mittels einer Schieberachse (44) zusammenarbeitet, die sich in einem Hohlraum (344) des Schiebers (34) bewegt und jeder der Hebel (42) eine feststehende Achse (420) umfasst, die schwenkbar in einem mit dem Aufnahmekörper (26) verbundenen Aufnahmeraum (364a) gemäß der mittleren Längsachse (X) montiert ist.

9. Fluidkupplung nach Anspruch 8, **dadurch gekennzeichnet, dass** für jeden Hebel (42) in einer mit dem Kolben (38) und mit dem Schieber (34) gekuppelten Konfiguration das Verhältnis zwischen dem Abstand (d1) zwischen der festen Drehachse (Y420) und einer Mittelachse (Y48) des Ansatzes (48) und dem Abstand (d2) zwischen der festen Drehachse (Y420) und einer Mittelachse (Y44) der Schieberachse (44) streng größer als 1,2, vorzugsweise größer als oder gleich 2 ist.

10. Fluidkupplung nach einem der vorhergehenden Ansprüche, **dadurch gekennzeichnet, dass** der Schieber (34) durch eine Hülse gebildet ist, die ein Innenvolumen (V34) begrenzt, in dem der oder die Hebel (42) und der Kolben (38) montiert sind.

11. Fluidkupplung nach einem der vorhergehenden Ansprüche, **dadurch gekennzeichnet, dass** der Kolben (38) einen hinteren Zentrierstab (382) umfasst und dass in allen Position des Kolbens (38) in seiner Bewegung in Bezug auf den Aufnahmekörper (26) der hintere Stab (382) mit einem Führungsraum im Eingriff ist, der mit dem Aufnahmekörper (26) verbunden ist.

12. Fluidkupplung nach einem der vorhergehenden Ansprüche, **dadurch gekennzeichnet, dass** sie einen Gabelring (36) umfasst, der gemäß der mittleren Längsachse (X) mit dem Aufnahmekörper (26) verbunden montiert ist, und dass der Gabelring (36) mindestens einen Flansch (364) umfasst, der sich gemäß der mittleren Längsachse (X) erstreckt und seitlich mit dem Kolben (38) und dem Hebel (42) zusammenwirkt.

13. Fluidkupplung nach Anspruch 12, **dadurch gekennzeichnet, dass** der Gabelring (36) einen hinteren Anschlag für den Kolben (38) in seiner hinteren Position bildet.

14. Fluidkupplung nach einem der vorhergehenden Ansprüche, **dadurch gekennzeichnet, dass** der oder jeder Hebel (42) eine dreieckförmige Außenform aufweist.

15. Fluidkupplung nach einem der vorhergehenden Ansprüche, **dadurch gekennzeichnet, dass** der Einsteckkörper (2) eine Nase (8) aufweist, die mit der Möglichkeit der Bewegung quer zur mittleren Längsachse (X) in Bezug auf ein anderes Teil (4,6) des Einsteckelementes (2) montiert ist.

## Claims

1. A fluidic coupling (R) comprising a male coupling element (A) and a female coupling element (B) able to fit in one another, the male element (A) comprising:
- a male body (2) defining an inner conduit (18),
- a valve (20), movable relative to the male body (2) between an open position and a sealed closed position of the inner conduit (18) of the male body (2),
- a spring (24) pushing the valve (20) back toward its closed position,
and the female coupling element (B) comprising:
- a female body (26) defining an inner conduit (32) along a longitudinal central axis (X) and including at least one sealing gasket (35),
- a piston (38) extending along the longitudinal central axis (X),
- a slide valve (34) mounted around the piston (38) and movable relative to the female body (26) along the longitudinal central axis (X) between a closed position, in which the sealing gasket (35) of the female body (26) cooperates with the slide valve (34) and the slide valve (34) cooperates sealably with the piston (38), and a retracted open position of the inner conduit (32) of the female body (26),
in a coupling phase between the male element (A) and the female element (B), the male body (2) pushes the slide valve (34) back toward its open position and the piston (38) pushes the valve (20) back toward its open position,
the fluidic coupling (R) being **characterized in that**:
- the piston (38) is mounted with the possibility of movement relative to the female body (26) along the longitudinal central axis (X) between a rear position and a forward position,
- the female element (B) comprises at least one lever (42) for converting the movement of the slide valve (34) into movement of the piston (38),
- during the coupling phase:
from the closed position of the slide valve (34) to an offset position of the slide valve (34), in which the male body (2) cooperates with the sealing gasket (35) of the female body (26), the or each lever (42) is disengaged from the slide valve (34) and/or the piston (38), and the piston (38) is in the rear position;
from the offset position of the slide valve (34) to the open position of the slide valve (34), the lever (42) is engaged with the slide valve (34) and with the piston (38), and moves the piston (38) toward its forward position;
- in the coupled configuration, the piston (38) is in its forward position and extends partially in the male body (2), a fluid passage (E) being formed around the piston (38) in the male body (2).

2. The fluidic coupling according to claim 1, **characterized in that** the lever (42) is mounted rotatably around a fixed rotation axis (Y420) relative to the female body (26).

3. The fluidic coupling according to one of the preceding claims, **characterized in that** the lever (42) cooperates with the piston (38) by a pin (48, 388) moving in a hole (386; 426), and **in that** the lever (42) is engaged with the piston (38) by cooperation of the pin (48; 388) with an active surface (386a; 426a) of the hole (386; 426).

4. The fluidic coupling according to claims 2 and 3, **characterized in that** between the closed position and the offset position of the slide valve, the lever (42) is detached from the piston (38) and the pin (48) is in motion in the hole (386) along a curved surface (386b) of the hole (386), centered on the rotation axis (Y420) of the lever (42).

5. The fluidic coupling according to one of the preceding claims, **characterized in that** the slide valve (34) cooperates with the lever (42) by a slide valve axle (44; 348) moving in a cavity (344; 428), and **in that** the lever (42) is engaged with the slide valve (34) by cooperation of the slide valve axle (44; 348) with an active surface (344a, 344b; 428b, 428c) of the cavity (344; 428).

6. The fluidic coupling according to one of the preceding claims, **characterized in that**, between the closed position and the offset position of the slide valve (34), the lever (42) is detached from the slide valve (34) and **in that** the slide valve (34) cooperates with the lever (42) by a slide valve axle (348) moving in a cavity (428) comprising a longitudinal sliding portion (428a) in which the slide valve axle (348) moves when the lever (42) is detached from the slide valve (34), and an active surface (428b) inclined relative to the sliding portion (428a), with which the slide valve axle (348) cooperates when the lever (42) is engaged with the slide valve (34).

7. The fluidic coupling according to one of the preceding claims, **characterized in that** the ratio between an axial movement travel (c38) of the piston (38) between its rear position and its forward position and an axial movement travel (c34) of the slide valve (34) between its offset position and its open position in the coupled configuration is at least equal to 1.2, preferably at least equal to 2.25.

8. The fluidic coupling according to one of the preceding claims, **characterized in that** the piston (38) extends along the longitudinal central axis (X), and **in that** the female element (B) comprises two levers (42) positioned on either side of the longitudinal central axis (X), each of the levers (42) cooperating with the piston (38) by a pin (48) moving in a hole (386) of the piston (38), each of the levers (42) cooperating with the slide valve (34) by a slide valve axle (44) moving in a cavity (344) of the slide valve (34), and each of the levers (42) comprising a fixed axle (420) pivoting in a housing (364a) secured to the female body (26) along the longitudinal central axis (X).

9. The fluidic coupling according to claim 8, **characterized in that** for each lever (42), in a configuration engaged with the piston (38) and with the slide valve (34), the ratio between the distance (d1) between the fixed rotation axis (Y420) and a central axis (Y48) of the pin (48) and the distance (d2) between the fixed rotation axis (Y420) and a central axis (Y44) of the slide valve axle (44) is strictly greater than 1.2, preferably greater than or equal to 2.

10. The fluidic coupling according to one of the preceding claims, **characterized in that** the slide valve (34) is formed by a ring delimiting an inner volume (V34) in which the lever(s) (42) and the piston (38) are mounted.

11. The fluidic coupling according to one of the preceding claims, **characterized in that** the piston (38) comprises a rear centering rod (382) and **in that**, in all the positions of the piston (38) in its movement relative to the female body (26), the rear rod (382) is engaged in a guide housing (362) secured to the female body (26).

12. The fluidic coupling according to one of the preceding claims, **characterized in that** it comprises a yoke ring (36) mounted secured to the female body (26) along the longitudinal central axis (X), and **in that** the yoke ring (36) comprises at least one flange (364) that extends along the longitudinal central axis (X) and that cooperates laterally with the piston (38) and the lever (42).

13. The fluidic coupling according to claim 12, **characterized in that** the yoke ring (36) forms a stop behind the piston (38) in its rear position.

14. The fluidic coupling according to one of the preceding claims, **characterized in that** the or each lever (42) has a triangular outer shape.

15. The fluidic coupling according to one of the preceding claims, **characterized in that** the male body (2) comprises a nose (8) mounted with the possibility of movement, transversely to the longitudinal central axis (X), relative to another portion (4, 6) of the male body (2).
